# EUROPEAN PATENT SPECIFICATION

(11) **EP 0 572 392 B1**
(45) Date of publication and mention of the grant of the patent: **12.06.1996**
(21) Application number: 91906165.5
(22) Date of filing: 14.03.1991
(51) Int. Cl.: A01F 15/08

(54) **BALE WRAPPER APPARATUS**
BALLENWICKLERGERÄT
APPAREIL D'EMBALLAGE DE BALLES

(30) Priority: 14.03.1990 GB 9005782; 08.11.1990 GB 9024321
(43) Date of publication of application: 08.12.1993
(73) Proprietor: KVERNELAND UNDERHAUG AS, N-4350 Naerbo (NO)
(72) Inventor: FYKSE, Njaal, N-4350 Naerbo (NO); MAUDAL, Kjell, N-4350 Naerbo (NO)
(74) Representative: Orr, William McLean
(86) International application number: GB9100398
(87) International publication number: WO9113540

(56) References cited:
- WO-A-88/03896
- DE-U- 9 004 354
- GB-A- 2 158 111
- US-A- 4 195 958
- Landtechnik, volume 43, no. 11, november 1988, Lehrte, (DE), H. Schulz et al.:
- "Das Folienwickel-verfahren zum Silieren von Rundballen", pages 456-459

## Description

This invention relates to a wrapper apparatus for applying a stretchable plastics film around a bale of rectangular cross section in order to form a substantially air tight and water tight wrapping around the bale.

The application of helical windings of pre-stretched film around so-called "round bales" or "big bales" (which are cylinders of circular cross section) is now employed to a large extent in many countries in order to form substantially air and water tight wrappings around the bales. This technique is employed in order to form a weather proof protective wrapping which can maintain the bale material in a dry state in the case of dried material, such as straw or hay. In addition, the technique may be used to seal the bale contents from contact with atmospheric oxygen so that wet or damp bale material, such as newly cut and baled grass, or ammonium treated straw can ferment over a period of time to form silage.

The formation of silage within wrapped round bales is gaining wide acceptance by farmers and contractors, because it avoids the costs of installing expensive silage towers.

One well known machine comprises the Silawrap bale wrapper apparatus manufactured by Kverneland Underhaug AS of Naerbo, Norway, and which is protected by GB patent No 2159489B, and other still pending patent applications.

The Silawrap machine comprises a turntable which rotates about a substantially vertical axis, and on which is mounted a pair of laterally spaced substantially horizontal rollers which support a cylindrical bale by means of one or more slack belts taken around the rollers, and at least one of which rollers is driven in order to rotate the bale about its longitudinal axis. The end of a length of stretchable plastics film is applied to the bale manually, or by automatic apparatus e.g. the cut and tie mechanism which forms the subject of EP 0367529A, and the combined rotations of the bale about both vertical and horizontal axes causes a helical winding of film to be applied around the bale, with successive turns partially overlapping until such time as the bale is completely covered twice over.

With careful control being exercised in monitoring the wrapping operation, it is generally possible to ensure that each part of the outer surface of the bale is covered by four successive layers, since each winding is partially overlapped by about 50% or more, and two complete coverings are applied.

It is important to achieve this four layer covering of the bale, in order to minimise the risks of rain water and damp penetrating the wrapping and coming into contact with the baled material. Obviously, it will be undesirable for water to come into contact with material which is intended to remain in a dry state e.g. hay or straw, but also water ingress may upset the fermentation process which takes place during conversion of undried grass or ammonium treated straw to form silage. In addition, the wrapping should act as far as possible to prevent ingress of atmospheric oxygen which also would adversely affect silage production. The use of a number of layers to cover the outer periphery of the bale is therefore necessary (e.g. four layers with existing film) to minimise water and air penetration of the wrapping, bearing in mind that bales are usually stacked, and undergo some deformation during handling and storage, and especially when silage is being produced during storage.

When operated properly, the Silawrap machine is able to apply reliable wrapping around bales of long stem and other agricultural material, provided that the bales are supplied in the substantially cylindrical form, so that the bales can be rotated at substantially uniform speed about their longitudinal axes. Evidently, the extent of overlap of successive windings will depend upon the size of the bale, the width of the film and the ratio of the speeds of revolution of the platform about the vertical axis and of the bale about the horizontal axis.

However, while cylindrical bales have been produced for a number of years using balers which can form big bales or round bales, and which has in many cases superceded the previous use of balers which produce bales of rectangular cross section, there still remains a substantial production of rectangular section bales. Furthermore, balers which produce rectangular section bales are generally able to produce a denser bale by virtue of the piston type compression action involved to produce the bale, and therefore less storage space is required as the weight / volume ratio of rectangular section bales can be higher than that of cylindrical bales.

Also, rectangular section bales can be transported and stored more efficiently than cylindrical bales, because they are able to fit together with less voids between them.

There is therefore substantial existing production of rectangular bales, and for the reasons set out above it is believed that this may increase in the future.

However, evidently the wrapping of rectangular section bales with pre-stretched film by existing automatic apparatus would present a number of significant problems. Thus, a rectangular section bale cannot readily be rotated about a horizontal axis in the same way as a cylindrical bale, which has a circular outer periphery and which is engaged throughout a major part of this periphery at any one time by the rollers and the slack belts running over the rollers.

Attempts have been made to wrap rectangular section bales by carrying out simultaneous rotation about vertical and horizontal axes (in the same way as for cylindrical bale wrapping), but none of these has been found to operate a consistent and repeatable standard of wrapping. Imperfect wrapping results in spoiling of the product when water and air come into contact with the product, and this lowers the commercial value of the wrapped product and also its effectiveness as a foodstuff for animals.

The problem with existing equipment is believed to arise because of the inevitable variation in speed of rotation of the bale about the horizontal axis, with resulting variation in the degree of overlap (or even no overlap at all) between successive windings. If attempt is made to compensate for this by applying extra windings around the bale e.g. by increasing the speed of rotation of the bale about the vertical axis and / or reducing the speed of rotation of the bale about the horizontal axis, this will result in inefficient use of the relatively expensive film wrapping material.

The problem of variable rotational speed of the bale about the horizontal axis arises, at least in part, because the rectangular cross section is non-square i.e. the length is greater than the width of the cross section, and also because of the difficulties of engaging the outer periphery of the rotating bale in a way so as to apply a substantially uniform rate of angular speed about a generally horizontal axis.

The invention is based on the surprising discovery that a rotating platform type of bale wrapper apparatus e.g. of the type suitable for wrapping a cylindrical bale, can be modified so as to apply pre-stretched film wrapping around a bale of rectangular cross section in an acceptable manner.

The invention therefore enables many of the features of the well proven design of bale wrapper apparatus for cylindrical bales to be used in the wrapping of rectangular cross section bales.

According to the invention there is provided a bale wrapper apparatus for applying a pre-stretched film around a bale of rectangular cross section in order to form a substantially air tight and water tight wrapping around the bale and which comprises:
a platform which is rotatable about a substantially vertical axis;
a pair of rollers mounted on the platform for rotation about substantially horizontal axes and laterally spaced apart from each other;
one or more endless slack belts taken around the rollers and defining a trough shape into which the rectangular section of the bale can be received with the upper and lower sides of the bale disposed in substantially horizontal planes, the arrangement being such that upon the application of drive to at least one of the rollers, the belt(s) can cause the bale to carry out a rotary tumbling action about a substantially horizontal axis;
a support for mounting a film dispenser reel from which film can be withdrawn for attachment to the bale prior to wrapping of the film around the bale;
a pre-stretcher mechanism engageable with the film as it passes from the reel to the bale, and operable to stretch the film prior to its application around the bale upon rotation of the platform about its axis and upon rotation of the bale by the belt(s); and,
a guide arranged above one of the rollers in order to engage intermittently with portions of the outer periphery of the rotating bale and thereby to prevent such portions from falling under gravity onto said one roller and also to retard the instantaneous speed of rotation of the bale by remaining in engagement with the bale while the bale is further rotated by the belt(s) thereby to act so as to maintain a generally uniform rate of rotation of the bale.

In the absence of the guide, rotation of the rectangular section bale by the endless belt would tend to cause the bale to carry out a tumbling type of rotation, with the centre of gravity of the bale orbiting around a fixed axis, and as the bale will usually be of non-square cross section, the instantaneous speed of rotation of the bale will vary between maximum and minimum values during each revolution. This would cause uneven wrapping of the bale by the film, as the windings would not follow uniform helical paths by reason of the variation in rotational speed of the bale, with consequent variation in the extent of overlap (or even no overlap) between successive windings. However, by arranging the guide above one of the rollers, the rotation of the bale is made more uniform, in that the guide slows the rotation of the bale at a phase in its rotation when it would otherwise be accelerating, and therefore more uniform film wrapping takes place.

Given that one dimension of the rectangular cross section (the length) will usually be greater than the other dimension (the width), in the absence of the guide there would normally be a tendency for the rotation of the bale to accelerate as the longer sides move from a vertical attitude towards a horizontal attitude, and also would be liable to fall onto said one roller, but with the guide being arranged in the path of rotation of the edge regions of the longer sides, such edge regions are held away from contact with said one roller while the adjacent upstream edge of the bale is engaged and conveyed forwardly by the belt and therefore forms the instantaneous centre of rotation of the bale until such time as the bale moves out of engagement with the guide.

The guide may comprise a guide roller carried by an arm which is mounted on the platform for rotation therewith. The roller may be biased by any suitable means e.g. a spring arrangement to a position which lies in the path of the edge regions of the longer sides of the bale cross section. However, other arrangements of guide may be provided, such as a guide plate which may be fixed, or which may be able to yield against resilient opposition when engaged by the bale during its rotation.

Preferably, a number of slack belts are taken over the rollers and are spaced apart along their lengths, in order to define the trough shape in which the bale can be received.

In order to improve the gripping engagement of the arrangement of belts with the bale periphery, preferably at least one of the belts is ribbed.

One embodiment of bale wrapper apparatus according to the invention will now be described in detail, by way of example only, with reference to the accompanying drawing, in which:
Figure 1 is a side view of the embodiment of bale wrapper apparatus;
Figure 2 is a plan view of the bale wrapper apparatus;
Figure 3a is a schematic side view of a modified arrangement according to the invention, and showing a rectangular bale being rotated;
Figure 3b is a side view, similar to Figure 3a, but with the bale omitted to show further detail of the apparatus;
Figure 4 is a plan view corresponding to Figures 3a and 3b; and,
Figure 5 is showing a further side view modified arrangement according to the invention.

Referring now to the drawing, the embodiment of bale wrapper apparatus according to the invention is designated generally by reference 10 and is intended to apply a pre-stretched plastics film 11 around a bale 12 of rectangular cross section in order to form a substantially air tight and water tight wrapping around the bale. The apparatus 10 comprises a chassis 12a having a towing hitch 13 at its forward end for attachment to a propelling vehicle, and provided with a set of wheels 14 at its rear end.

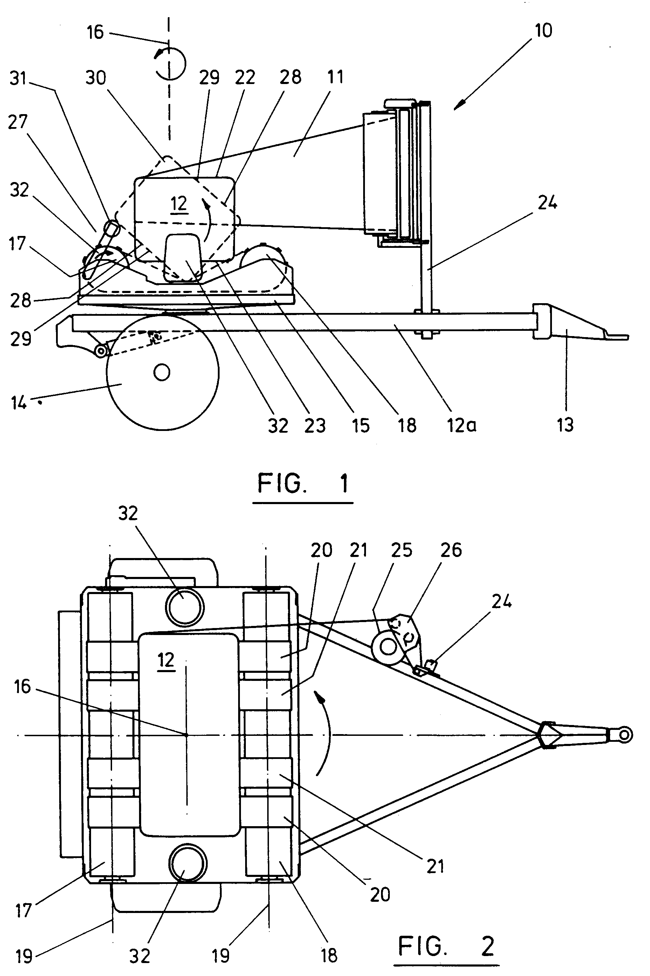

A platform 15 is mounted on the chassis 12 for rotation about a substantially vertical axis 16, and a pair of rollers 17 and 18 are mounted on the platform 15 for rotation about substantially horizontal axes 19, the rollers 17 and 18 being laterally spaced apart from each other in order to receive the bale 12 therebetween. A number of slack belts 20 and 21 are taken around the rollers 17 and 18 and define a trough shape into which the rectangular sect ion of the bale 12 can be received, as shown in full lines in Figure 1, and in which the upper side 22 and lower side 23 of the bale are disposed in substantially horizontal planes. It will be noted from Figure 1 that the lower side 23 is located between the rollers 17 and 18, and at a lower level than the horizontal plane passing through the upper regions of the rollers 17 and 18.

The roller 17 is a driven roller, and the arrangement is such that the belts 20 and 21 can cause the bale to carry out a rotary tumbling action in the direction of the arrow shown in Figure 1 about a generally horizontal axis. The full line position of the bale 12 shown in Figure 1 shows the starting position, and the dashed outline shows the position taken-up by the bale after rotation through approximately 135^{o}.

A support 24 is mounted on the chassis 12a and carries a film dispenser reel 25 and an associated film pre-stretcher mechanism 26 which engages with the film as it is withdrawn from the reel 25 and passes to the bale 12, this mechanism being operable to stretch the film prior to its application around the bale upon rotation of platform 15 about axis 16 and rotation of the bale about a generally horizontal axis upon operation of the rollers 17 and 18 and slack belts 20 and 21. The pre-stretcher mechanism may be as disclosed in more detail in EP No 0291483.

A guide 27 is arranged above the drive roller 17 in order to engage intermittently with portions of the outer periphery of the rotating bale, and specifically with the edge regions 28 of the longer sides 29 of the rectangular section of the bale. The purpose of the guide is to prevent the edge portions 28 falling under gravity onto the roller 17, and in addition to retard the instantaneous speed of rotation of the bale at this phase in each revolution by remaining in engagement with the bale while the bale is further rotated by the belt. Thus, the geometry of the system is such that a generally uniform rate of tumbling rotation is applied to the bale, despite the fact that it has a rectangular cross section.

In the absence of the guide arrangement 27, rotation of the bale 12 by the endless belts 20 and 21 would tend to cause the bale to carry out a tumbling type of rotation, with the centre of gravity of the bale orbiting around a fixed axis, so that the instantaneous speed of rotation of the bale during each revolution will vary between maximum and minimum values. However, the guide arrangement 27 acts to smooth out the fluctuations which otherwise would occur in a speed of revolution / time graph, and thereby enabling more uniform helical windings to be applied around the bale.

During each revolution of the bale 12, each of the edge regions 28 of the longer sides 29 will come into contact with the guide arrangements 27, and at that time the adjacent upstream edge 30 of the bale is engaged and conveyed forwardly by the belts thereby forming an instantaneous centre of rotation of the bale, until such time as the edge regions 28 slide out of engagement with the guide arrangement 27. (Generally, the roller 31 will engage the bale side at or near to the corner of the bale, but the "edge region" engaged may extend away from the corner by a distance up to less than half way along the bale side). It should be noted particularly from Figure 1 that the arrangement of the slack belts allows the edge 30 to descend to a lower level than that of lower side 23 of the bale when in the horizontal attitude.

In the illustrated embodiment, the guide 27 comprises a guide roller 31 carried by an arm 32 which is pivotally mounted on the platform 15 for rotation therewith. The roller 31 may be biased in a clockwise direction as shown by any suitable means e.g. a spring arrangement, to a position which lies in the path of the edge regions 28 of the longer sides 29 of the bale cross section. However, although not shown, other arrangements of guide may be provided, such as a guide plate (not shown) which may be fixed, or arranged to yield against resilient opposition when engaged by the bale during its revolution.

In the illustrated arrangement, four sets of slack belts 20 and 21 are provided, arranged in pairs, and preferably at least one of the belts in each pair is ribbed in order to improve the gripping engagement with the outer periphery of the bale.

Usual frusto-conical guides 32 are mounted on the platform 15 adjacent each end of the bale 12 to guide the latter during its rotation.

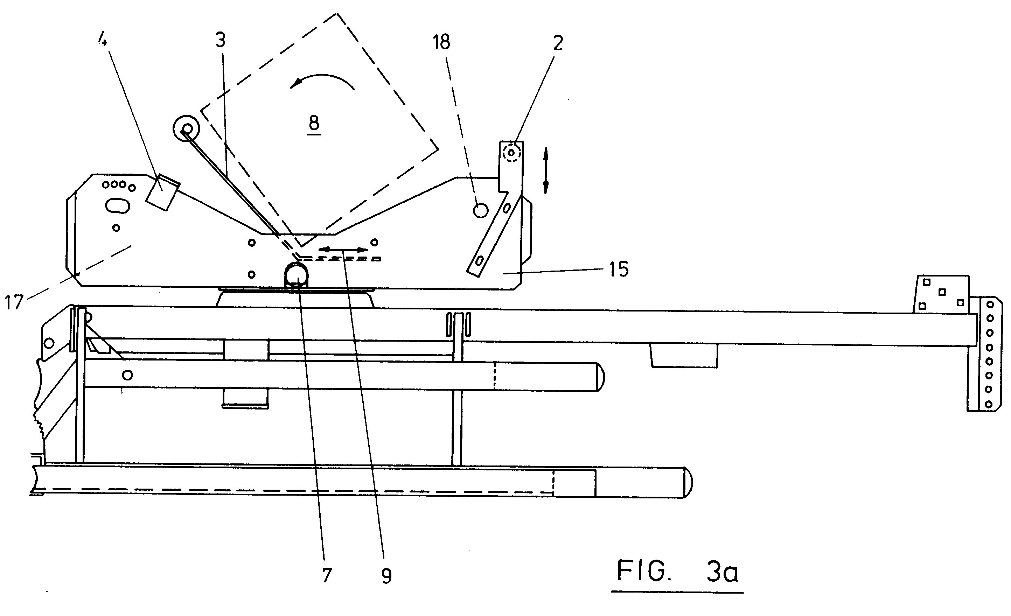

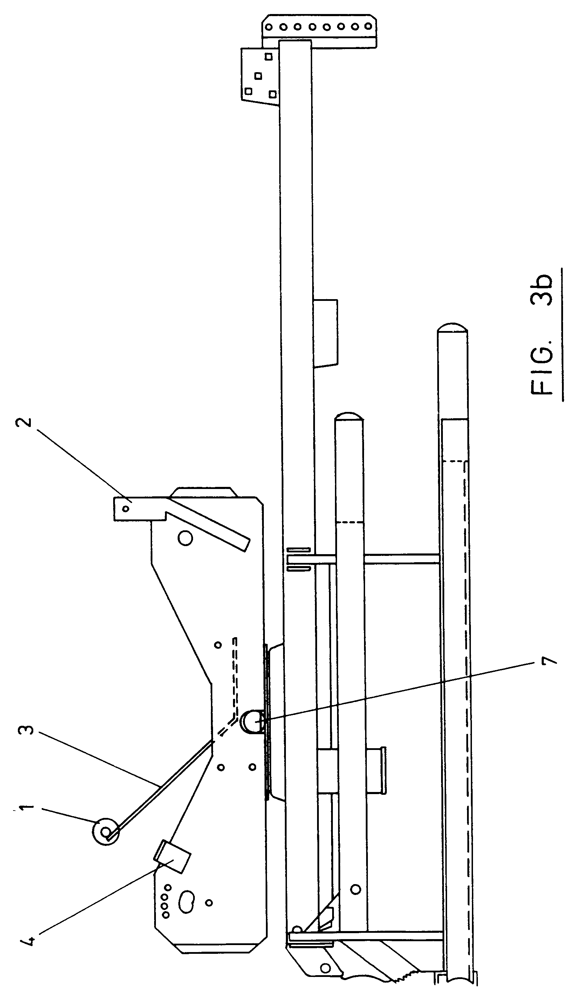

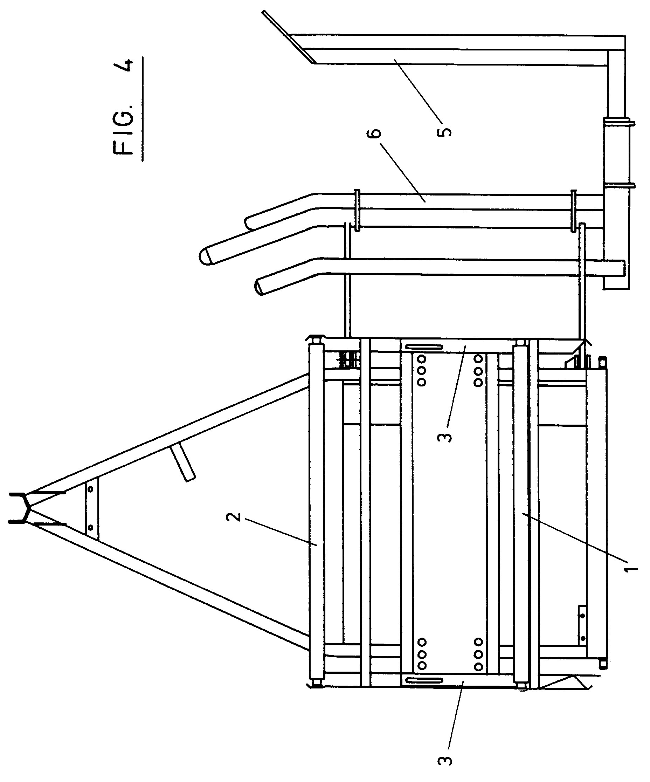

Referring now to Figures 3a, 3b and 4 of the drawings, this shows a modified arrangement according to the invention, which is capable of supporting and of controlling the rotation of a rectangular bale, so as to maintain the rotation of the bale at a substantially uniform rate, despite the fact that it is of rectangular cross section, and is supported on a platform which may have been designed originally in order to support and to rotate a circular cross section bale.

In the modified arrangement, there is a support roll 1 which is adjustable on a leaf spring 3, and which engages the side of the rotating bale in order to control its rate of rotation. There is also a support roll 2 which is adjustable in height, as shown in Figures 3a and 3b, and which also may be used to control the rotation of a rectangular section bale, and especially a larger bale than that shown in the drawing.

There is also a damper 4 mounted on the platform, and which is able to absorb the impact of the rotating bale. Further, the instantaneous point of support 7 of a rectangular bale 8 is horizontally adjustable, as shown by arrows 9.

To achieve a satisfactory rotation of the rectangular bale, it is important to ensure that the tension of the slack belts (taken around the rollers 17 and 18 in Figures 1 and 2) is adjusted to a level sufficient to achieve substantially uniform rotation of the rectangular (square) bale, depending upon the dimensions of the bale. Evidently, adjustment of the tension of the belts will alter the profile of the trough shape which the belts will take-up (in the absence of any load thereon), and this will influence the manner by which the bale is supported on the belts and then caused to rotate. As shown in Figure 3a, the bale 8 has an instantaneous engagement with the belts along a line, and which forms an instantaneous centre of rotation of the bale.

The spring supported roll 1 functions in generally similar manner to that described above for roll 31 in Figures 1 and 2, but the arrangement shown in Figures 3 and 4 provides improved control over the rate of rotation of the bale 8 about a generally horizontal axis, thereby to provide more uniform overlapping webs of wrapping material around the bale during combined rotation of the bale about vertical and horizontal axes while film is withdrawn from the stationary film dispenser reel.

Typical bale dimensions of rectangular (or square) bales which can be successfully wrapped comprise: 90 x 90 x 160 cm; 90 x 80 x 160 cm; 80 x 80 x 160 cm; 80 x 70 x 160 cm; and 70 x 70 x 160 cm.

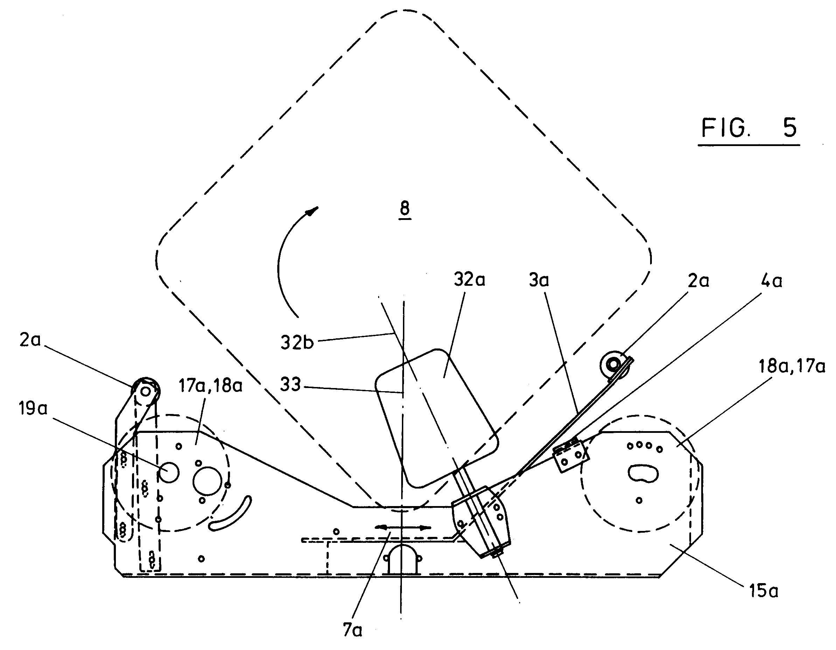

Referring finally to Figure 5 of the drawings, this shows a further modified arrangement in accordance with the invention, and in which parts corresponding with those which have already been described in the previous figures are given the same reference numerals, but with the addition of the letter a.

As described above with reference to Figures 3a and 3b, the instantaneous centre of rotation 7 of bale 8 can be horizontally adjusted, in order to suit the dimensions of any particular square or rectangular bale which is to be wrapped. Figure 5 shows one arrangement whereby this horizontal adjustment of the instantaneous centre of rotation 7a can be adjusted, which comprises the provision of means for adjusting the axis 19a of one of the platform rollers 17a or 18a, whereby to vary the position of the instantaneous centre of rotation.

Figure 5 also shows an alternative arrangement for the frusto-conical end guides 32 of Figures 1 and 2, which engage the opposed end faces of the bale in order to maintain it in position on the platform during rotation of the bale.

As can be seen in Figure 5, end guides 32a are provided which have their axis of rotation 32b angularly off-set with respect to a vertical line 33 extending upwardly from the instantaneous centre of rotation 7a. It has been found that this gives improved guidance to the opposed end faces of the bale during its rotation.

## Claims

1. A bale wrapper apparatus (10) for applying a pre-stretched film (11) around a bale (12) of rectangular cross section in order to form a substantially air tight and water tight wrapping around the bale and which comprises:
a platform (15) which is rotatable about a substantially vertical axis (16);
a pair of rollers (17, 18) mounted on the platform (15) for rotation about substantially horizontal axes (19) and laterally spaced apart from each other;
one or more slack belts (20, 21) taken around the rollers (17, 18) and defining a trough shape into which the rectangular section of the bale can be received with the upper (22) and lower (23) sides of the bale disposed in substantially horizontal planes, the arrangement being such that upon the application of drive to at least one of the rollers (17), the belts (20, 21) can cause the bale (12) to carry out a rotary tumbling action about a substantially horizontal axis;
a support (24) for mounting a film dispenser reel (25) from which film (11) can be withdrawn for attachment to the bale (12) prior to wrapping of the film around the bale;
a pre-stretcher mechanism (26) engageable with the film (11) as it passes from the reel (25) to the bale (12), and operable to stretch the film prior to its application around the bale upon rotation of the platform (15) about its axis (16) and upon rotation of the bale (12) by the belts (20, 21); and,
a guide (27) arranged above one of the rollers (17) in order to engage intermittently with portions (28) on the outer periphery of the rotating bale (12) thereby to prevent such portions from falling under gravity onto said one roller (17) and also to retard the instantaneous speed of rotation of the bale by remaining in engagement with the bale while the bale is further rotated by the belts (20, 21), thereby to act so as to maintain a generally uniform rate of rotation of the bale.

2. A bale wrapper apparatus according to Claim 1, in which the guide (27) comprises a guide roller (31) carried by an arm (32) which is mounted on the platform (15) for rotation therewith.

3. A bale wrapper apparatus according to Claim 2, in which the roller (31) is biased to a position which lies in the path of the edge regions (28) of the longer sides (22, 23) of the bale cross section.

4. A bale wrapper apparatus according to Claim 1, in which the guide comprises a guide plate.

5. A bale wrapper apparatus according to Claim 4, in which the guide plate is fixed.

6. A bale wrapper apparatus according to Claim 4, in which the guide plate is arranged to yield against resilient opposition when engaged by the bale during its rotation.

7. A bale wrapper apparatus according to any one of the preceding claims, including a plurality of slack belts (20, 21) taken around the rollers and spaced apart along the length of the rollers.

8. A bale wrapper apparatus according to Claim 7, in which at least one of the belts (21) is ribbed in order to improve the gripping engagment with the outer periphery of the rotating bale.

9. A bale wrapper apparatus according to Claim 1, in which the guide comprises a guide roller (1) mounted on a leaf spring (3) which is arranged to yield in a direction towards said one roller (17) when engaged by the rotating bale (8).

10. A bale wrapper apparatus according to Claim 9, in which a support roll (2) is mounted on the platform (15) above the other roller (18) to control the rotation of larger bales.

11. A bale wrapper apparatus according to Claim 10, in which the support roll (2) is adjustable in height relative to the platform (15).

12. A bale wrapper apparatus according to any one of Claims 9 to 11, in which the instantaneous centre of rotation (7) of the bale (8) on the belts (20, 21) is horizontally adjustable.

13. A bale wrapper apparatus according to Claim 12, in which the axis (19a) of at least one of the platform rollers (17a, 18a) is adjustable in order to vary the position of the instantaneous centre of rotation (7a).

14. A bale wrapper apparatus according to Claim 13, in which end guides (32a) are mounted on the platform (15a) to engage the ends of the bale (8), and which have their axes of rotation (32b) angularly off-set with respect to a vertical line (33) extending upwardly from the instantaneous centre of rotation (7a).

## Patentansprüche

1. Ballenwicklergerät (10), mit welchem eine vorgespannte Folie (11) um einen Ballen (12) mit rechteckigem Querschnitt gelegt werden kann, um so eine im wesentlichen luft- und wasserdichte Umwicklung um den Ballen zu bilden, mit
einer Plattform (15), die um eine im wesentlichen vertikale Achse (16) verdrehbar ist;
einem Paar von Walzen (17, 18), die so auf der Plattform (15) montiert sind, daß sie eine Verdrehung um im wesentlichen horizontale Achsen (19) ausführen können, und die seitlich einem Abstand voneinander aufweisen,
einem oder mehreren schlaffen Riemen (20, 21), die um die Walzen (17, 18) geführt sind und eine Trogform bilden, in welcher der rechteckige Querschnitt des Ballens bei Ausrichtung der oberen (22) und der unteren (23) Seite des Ballens in im wesentlichen horizontalen Ebenen aufgenommen werden kann, wobei die Anordnung derart ist, daß die Riemen (20, 21) den Ballen (12) in eine taumelnde Drehbewegung um eine im wesentlichen horizontale Achse versetzen können, wenn mindestens eine der Walzen (17) angetrieben wird;
einem Träger (24) zur Montage einer Folien-Abgabehaspel (25), von welcher die Folie (11) zur Befestigung am Ballen (12) vor dem Umwickeln der Folie um den Ballen abgezogen werden kann;
einem Vorspannmechanismus (26), der in Eingriff mit der Folie (11) gebracht werden kann, während diese von der Haspel (25) zum Ballen (12) läuft, und der dazu dient, die Folie vor ihrer Aufbringung um den Ballen bei einer Verdrehung der Plattform (15) um ihre Achse (16) und bei einer Verdrehung des Ballens (12) durch die Riemen (20, 21) zu spannen; und
einer Führung (27), die oberhalb einer der Walzen (17) angeordnet ist und intermittierend mit Bereichen (28) des Außenumfanges des rotierenden Ballens (12) in Eingriff gelangt und auf diese Weise verhindert, daß diese Bereiche unter dem Einfluß der Schwerkraft auf die eine Walze (17) fallen, und die außerdem die momentane Drehgeschwindigkeit des Ballens dadurch verzögert, daß sie in Eingriff mit dem Ballen bleibt, während der Ballen durch die Riemen (20, 21) weiter verdreht wird, wodurch eine im wesentlichen gleichförmige Drehgeschwindigkeit des Ballens aufrechterhalten wird.

2. Ballenwicklergerät nach Anspruch 1, bei welchem die Führung (27) eine Führungswalze (31) umfaßt, die von einem Arm (32) getragen ist, der an der Plattform (15) montiert ist und sich mit dieser verdreht.

3. Ballenwicklergerät nach Anspruch 2, bei welchem die Walze (31) in eine Position gedrückt wird, welche im Weg der Kantenbereiche (28) der längeren Seiten (22, 23) des Ballenquerschnittes liegt.

4. Ballenwicklergerät nach Anspruch 1, bei welchem die Führung eine Führungsplatte unfaßt.

5. Ballenwicklergerät nach Anspruch 4, bei welchem die Führungsplatte feststeht.

6. Ballenwicklergerät nach Anspruch 4, bei welchem die Führungsplatte so angeordnet ist, daß sie gegen eine elastische Rückstellkraft nachgibt, wenn sie vom Ballen während dessen Verdrehung berührt wird.

7. Ballenwicklergerät nach einem der vorhergehenden Ansprüche, welches eine Mehrzahl von schlaffen Riemen (20, 21) umfaßt, die um die Walzen herumgeführt sind und entlang der Längsrichtung der Walzen einen Abstand voneinander aufweisen.

8. Ballenwicklergerät nach Anspruch 7, bei welchem mindestens einer der Riemen (21) mit Rippen versehen ist, wodurch der Griff an dem Außenumfang des rotierenden Ballens verbessert wird.

9. Ballenwicklergerät nach Anspruch 1, bei welchem die Führung eine Führungswalze (1) umfaßt, die an einer Blattfeder (3) montiert ist, welche so angeordnet ist, daß sie in Richtung auf die eine Walze (17) hin nachgibt, wenn sie von dem rotierenden Ballen (8) berührt wird.

10. Ballenwicklergerät nach Anspruch 9, bei welchem eine Tragwalze (2) an der Plattform (15) oberhalb der anderen Walze (18) zur Kontrolle der Drehung größerer Ballen montiert ist.

11. Ballenwicklergerät nach Anspruch 10, bei welchem die Tragwalze (2) in der Höhe gegenüber der Plattform (15) einstellbar ist.

12. Ballenwicklergerät nach einem der Ansprüche 9 bis 11, bei welchem der augenblickliche Drehmittelpunkt (7) des Ballens (8) auf den Riemen (20, 21) in horizontaler Richtung einstellbar ist.

13. Ballenwicklergerät nach Anspruch 12, bei welchem die Achse (19a) von mindestens einer der Plattformwalzen (17a, 18a) einstellbar ist, um so die Position des momentanen Drehmittelpunktes (7a) zu variieren.

14. Ballenwicklergerät nach Anspruch 13, bei welchem Endführungen (32a) an der Plattform (15a) montiert sind, welche die Enden des Ballens (8) berühren und deren Drehachsen (32b) gegenüber einer vertikalen Linie (33), die von dem momentanen Drehmittelpunkt (7a) nach oben verläuft, eine Winkelversetzung aufweisen.

## Revendications

1. Appareil (10) d'emballage de balles pour appliquer un film préétiré (11) autour d'une balle (12) de section transversale rectangulaire afin de former un emballage substantiellement imperméable à l'air et imperméable à l'eau autour de la balle et qui comprend :
une plate-forme (15) qui est capable de tourner autour d'un axe (16) substantiellement vertical ;
deux rouleaux (17, 18) montés sur la plate-forme (15) pour tourner autour d'axes substantiellement horizontaux (19) et séparés latéralement l'un de l'autre ;
une ou plusieurs courroies lâches (20, 21) prises autour des rouleaux (17, 18) et définissant une forme de gouttière dans laquelle la section rectangulaire de la balle peut être reçue avec les côtés supérieur (22) et inférieur (23) de la balle placés dans des plans substantiellement horizontaux, l'agencement étant tel qu'à l'application d'une commande à au moins un des rouleaux (17), les courroies (20, 21) peuvent entraîner la balle (12) à réaliser une action tournante de culbutage autour d'un axe substantiellement horizontal ;
un support (24) pour monter une bobine (25) de distributeur de film de laquelle un film (11) peut être retiré pour être fixé à la balle (12) avant l'emballage du film autour de la balle ;
un mécanisme de préétirement (26) pouvant être mis en prise avec le film (11) alors qu'il passe de la bobine (25) à la balle (12) et pouvant être actionné pour étirer le film avant son application autour de la balle lors de la rotation de la plate-forme (15) autour de son axe (16) et lors de la rotation de la balle (12) par les courroies (20, 21) ; et
un guide (27) disposé au-dessus d'un des rouleaux (17) afin de se mettre en prise par intermittence avec des parties (28) sur la périphérie extérieure de la balle en rotation (12) pour empêcher, de ce fait, ces parties de tomber sous l'effet de la gravité sur ledit premier rouleau (17) et aussi pour retarder la vitesse instantanée de rotation de la balle en restant en prise avec la balle tandis que la balle est davantage tournée par les courroies (20, 21), pour agir de ce fait de façon à maintenir une vitesse de rotation de la balle généralement uniforme.

2. Appareil d'emballage de balles selon la revendication 1, dans lequel le guide (27) comprend un rouleau de guidage (31) supporté par un bras (32) qui est monté sur la plate-forme (15) pour rotation avec celle-ci.

3. Appareil d'emballage de balles selon la revendication 2, dans lequel le rouleau (31) est appliqué selon une position se trouvant dans le trajet des régions de bord (28) des plus longs côtés (22, 23) de la section transversale de la balle.

4. Appareil d'emballage de balles selon la revendication 1, dans lequel le guide comprend une plaque de guidage.

5. Appareil d'emballage de balles selon la revendication 4, dans lequel la plaque de guidage est fixe.

6. Appareil d'emballage de balles selon la revendication 4, dans lequel la plaque de guidage est agencée pour fléchir face à une opposition élastique quand elle est en prise avec la balle pendant sa rotation.

7. Appareil d'emballage de balles selon l'une quelconque des revendications précédentes, comprenant une pluralité de courroies lâches (20, 21) prises autour des rouleaux et séparées le long de la longueur des rouleaux.

8. Appareil d'emballage de balles selon la revendication 7, dans lequel au moins une des courroies (21) est striée afin d'améliorer la prise par serrage avec la périphérie extérieure de la balle en rotation.

9. Appareil d'emballage de balles selon la revendication 1, dans lequel le guide comprend un rouleau de guidage (1) monté sur un ressort à lames (3) qui est agencé pour fléchir dans une direction vers ledit premier rouleau (17) quand il est en prise avec la balle en rotation (8).

10. Appareil d'emballage de balles selon la revendication 9, dans lequel un rouleau de support (2) est monté sur la plate-forme (15) au-dessus de l'autre rouleau (18) pour contrôler la rotation de plus grandes balles.

11. Appareil d'emballage de balles selon la revendication 10, dans lequel le rouleau de support (2) est ajustable en hauteur par rapport à la plate-forme (15).

12. Appareil d'emballage de balles selon l'une quelconque des revendications 9 à 11, dans lequel le centre instantané de rotation (7) de la balle (8) sur les courroies (20, 21) est ajustable horizontalement.

13. Appareil d'emballage de balles selon la revendication 12, dans lequel l'axe (19a) d'au moins un des rouleaux (17a, 18a) de plate-forme est ajustable afin de modifier la position du centre instantané de rotation (7a).

14. Appareil d'emballage de balles selon la revendication 13, dans lequel des guides d'extrémité (32a) sont montés sur la plate-forme (15a) pour être en prise avec les extrémités de la balle (8) et qui ont leurs axes de rotation (32b) décalés de manière angulaire par rapport à une ligne verticale (33) s'étendant vers le haut à partir du centre instantané de rotation (7a).
